# FASCICULE DE BREVET EUROPEEN

(11) **EP 4 076 914 B1**
(45) Date de publication et mention de la délivrance du brevet: **04.12.2024**
(21) Numéro de dépôt: 20838070.9
(22) Date de dépôt: 21.12.2020
(51) Int. Cl.: B29C 70/44, A45C 5/00, B29C 70/68, A45C 13/36, B29C 51/10, B29C 51/08, B32B 38/12, A45C 5/02, A45C 5/03, B29K 101/12, B29L 31/00

(54) **PROCÉDÉ ET OUTILLAGE POUR LA FABRICATION D'UNE COQUE QUADRANGULAIRE EN MATÉRIAU COMPOSITE**
VERFAHREN UND WERKZEUG ZUR HERSTELLUNG EINER VIERECKIGEN SCHALE AUS VERBUNDWERKSTOFF
METHOD AND TOOL FOR THE MANUFACTURE OF A QUADRANGULAR SHELL MADE OF COMPOSITE MATERIAL

(30) Priorité: 21.12.2019 FR 1915386
(43) Date de publication de la demande: 26.10.2022
(73) Titulaire: Roctool, 73370 Le Bourget du Lac (FR)
(72) Inventeur: FEIGENBLUM, José, 73170 SAINT PAUL (FR)
(74) Mandataire: Hamann, Jean-Christophe
(86) Numéro de dépôt international: PCT/EP2020/087548
(87) Numéro de publication internationale: WO 2021/123456

(56) Documents cités:
- EP-A1- 3 096 643
- EP-B1- 3 096 643
- WO-A1-2017/140982
- WO-A1-2017/153965

## Description

### Domaine technique

L'invention concerne un procédé et un outillage pour la réalisation d'une coque quadrangulaire en matériau composite.

L'invention s'applique principalement, mais non exclusivement, au domaine de la bagagerie, pour la réalisation d'une valise ou d'une malle à coque rigide.

### Technique antérieure

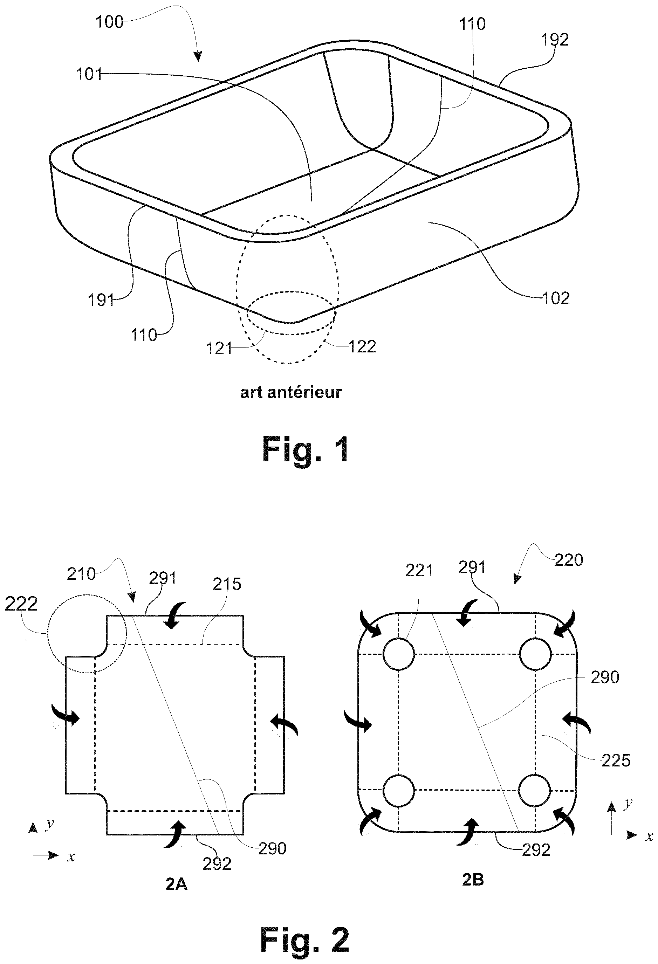

Figure 1, en référence à l'art antérieur, une valise ou une malle rigide comprend généralement deux coques quadrangulaires (100 une seule de ces coques est représentée sur cette figure) de profondeurs équivalentes ou différentes, comprenant 5 faces, assemblées par un mécanisme de charnière et de fermeture.

Chaque coque comporte un fond (101) et des bords tombés (102).

Lesdites coques sont, selon des exemples de réalisation, constituées d'un polymère thermoplastique, renforcé ou non, par des fibres, courtes ou continues, selon le mode de réalisation.

Une fibre dite continue (110) s'étend d'un bord libre (191) à un autre bord libre (192) de la coque. Cette définition d'un renfort continu est conservée dans tout le texte.

Lorsque la coque est constituée d'un composite renforcé par des fibres continues, celle-ci est obtenue, par exemple, en empilant des plis fibreux préimprégnés du polymère constituant la matrice, qui lors d'une étape ultérieure, est mis en forme et consolidé en forme par un procédé de thermocompression.

Le document EP 2 694 277 décrit un exemple d'un tel procédé de mise en forme d'un empilement de plis fibreux par thermocompression.

Les zones de raccordement (121, 122) entre les faces de la coque, particulièrement les zones de raccordement trièdre (121) ou « coins de malle », sont des zones critiques dans la mise en oeuvre de ce procédé, particulièrement lorsque les fibres de renfort utilisées ne présentent pas ou peu de plasticité à la température de formage, ou que leur rigidité les empêche de suivre ce contour complexe.

Les raccordements trièdres (121) décrivent généralement une surface en portion de sphère ou en portion d'ellipsoïde.

Tout d'abord, il est difficile de faire épouser ces formes, particulièrement en ce qui concerne les coins de malle (121) qui sont des zones non développables, sans créer de froissements dans les plis.

Il est difficile d'appliquer une pression dans ces zones sans utiliser un poinçon à mobilités ou comprenant des parties gonflables, donc un outillage complexe.

Il est difficile d'assurer une température de chauffage uniforme dans ces zones en mettant en oeuvre un outillage à chauffage et refroidissement rapides, tel que décrit dans le document EP 2 694 277.

Même en réussissant à éviter les froissements, par exemple en mettant les fibres en tension lors du formage, en réussissant à fournir un chauffage uniforme et une pression suffisante à la consolidation dans lesdites zones, des phénomènes d'essorage du polymère entre les fibres sont susceptibles de se produire, conduisant à des manques localisés de la matrice polymère et des défauts d'aspect.

Aussi, si le dispositif et le procédé décrits dans EP 2 694 277, donnent globalement satisfaction pour la fabrication de coques présentant un embouti peu profond, telles que des coques de protection de téléphone portable, la mise en oeuvre de ce procédé pour des coques renforcées par des fibres continues présentant un embouti plus profond, telles que pour des applications de bagagerie, reste d'un coût élevé.

Le document EP 3 096 643 B1 décrit un élément de bagage comprenant deux coques constituées d'un polymère renforcé par des fibres polymères. Lesdites coques sont obtenues en assemblant des panneaux à matrice polymère renforcés par des fibres polymères, plus particulièrement en assemblant un panneau de fond avec des panneaux latéraux, dans une opération de thermocompression/surmoulage. Aussi, si chaque panneau est individuellement renforcé par des fibres polymères continues, la coque obtenue n'est pas renforcée par un renfort continu s'étendant entre deux bords libres de ladite coque.

### Exposé de l'invention

L'invention vise à résoudre les inconvénients de l'art antérieur et concerne à cette fin un procédé pour la fabrication d'une coque quadrangulaire comprenant cinq faces avec des bords tombés et des raccords trièdres non développables entre les faces conformément à la revendication 1, comprenant les étapes consistant à :
i. découper des plis comprenant des fibres continues, lesdites fibres s'étendant d'un bord libre à un autre bord libre de la coque, les plis comprenant des découpes de sorte à ne pas couvrir les zones de raccordement trièdres ;
ii. obtenir quatre pièces de raccord consolidées à la forme desdits raccords trièdres, chaque pièces comprenant une zone d'intégration pour son insertion entre des plis ;
iii. positionner et empiler les plis obtenus à l'étape i)
iv. insérer les quatre pièces consolidées dans les zones de raccordement trièdres en insérant les zones d'intégration entre deux plis pour obtenir une préforme ;
v. placer la préforme dans un outillage et réaliser la consolidation de l'empilement de plis fibreux en soumettant l'ensemble obtenu à l'étape iv) à un cycle de pression - température prédéterminé.

Ainsi, les plis fibreux ne couvrent que des zones développables et sont installés dans ou sur l'outillage facilement, sans créer de froissement. Cependant, la pièce composite obtenue est renforcée par des fibres continues s'étendant d'un bord libre à un autre bord libre de la coque, ce qui assure la rigidité et la solidité de ladite coque.

Les coins de malle sont parfaitement intégrés après consolidation sans défaut d'aspect.

L'invention est mise en oeuvre selon les modes de réalisation et les variantes exposés ci-après, lesquels sont à considérer individuellement ou selon toute combinaison techniquement opérante.

Selon un mode de réalisation les pièces de raccord sont constituées d'un polymère thermoplastique et obtenues par un procédé d'injection. Ce procédé d'obtention est économique et reproductible en termes de forme obtenue.

Alternativement les pièces de raccord sont obtenues par un procédé de thermocompression.

Avantageusement, le polymère constituant les pièces de raccord est renforcé par des fibres courtes. Ainsi la résistance mécanique de ces pièces est améliorée.

Avantageusement, le polymère constituant les pièces de raccord est sélectionné de sorte que la température maximale de consolidation appliquée à l'ensemble lors de l'étape v) soit supérieure à la température de transition vitreuse dudit polymère mais inférieure à la température de fusion dudit polymère. Ainsi, la forme de la pièce de raccordement trièdre s'adapte à la forme de coque au cours de l'étape de consolidation.

Selon un mode de réalisation, les pièces de raccord s'étendent entre les bords tombés de la coque formée. Ce mode de réalisation permet de simplifier le découpage des plis.

Selon un mode de réalisation l'étape v) est réalisée dans un outillage comprenant un poinçon et une matrice appairés, l'ensemble obtenu à l'étape vi) étant compris entre le poinçon et la matrice lors de l'étape v).

Selon un autre mode de réalisation l'étape v) comprend le bâchage de l'ensemble obtenu à l'étape iv) par une bâche étanche et le tirage au vide de l'espace compris entre la bâche et l'outillage.

### Description sommaire des dessins

L'invention est exposée ci-après selon ses modes de réalisation préférés, nullement limitatifs et en référence aux figures 1 à 6 dans lesquelles :
[Fig.1] montre, selon une vue en perspective, un exemple de pièce redevable du procédé objet de l'invention ;
[Fig.2A] montre en vue de dessus un exemple de découpage de plis pour la fabrication d'une pièce telle par le procédé objet de l'invention ;
[Fig.2B] montre en vue de dessus un autre exemple de découpage d'un pli pour la réalisation d'une coque selon le procédé objet de l'invention ;
[Fig.3] représente selon une vue partielle en coupe, un exemple d'installation d'une préforme réalisée par le procédé objet de l'invention dans un outillage ;
[Fig.4] montre, selon une vue en perspective, un exemple de réalisation d'une pièce de raccord pour la mise en oeuvre du procédé objet de l'invention ;
[Fig.5] montre, selon une vue en coupe, un exemple d'outillage pour la mise en oeuvre du procédé objet de l'invention
[Fig.6] montre, selon une vue en coupe, un autre exemple d'outillage pour la mise en oeuvre du procédé objet de l'invention.

### Manière(s) de réaliser l'invention

Selon un exemple de réalisation, le procédé et le dispositif objet de l'invention sont mis en oeuvre pour la réalisation d'une coque quadrangulaire, similaire à celle de l'art antérieur, constituée d'un matériau composite comprenant une matrice polymère thermoplastique renforcée par des fibres (290) continues.

L'invention n'est cependant pas limitée à cet exemple de réalisation et peut être mise en oeuvre à partir de plis préimprégnés d'un polymère thermodurcissable.

A cette fin la préforme est réalisée par une stratification de plis fibreux (210, 220) comprenant des fibres (290) continues. Au moins un desdits plis fibreux (210, 220) comprend des fibres continues (290) s'étendant d'un bord libre (291) à un autre bord libre (292) de la coque une fois ladite coque réalisée selon le procédé de l'invention.

A titre d'exemple non limitatif, lesdits plis fibreux comprennent des fibres de verre, de carbone, des fibres naturelles telles que des fibres de lin, de bambou ou de sisal, ou des fibres polymères, sous la forme d'un tissu ou d'un non-tissé, enduites d'un polymère thermoplastique, comêlées avec un polymère thermoplastique ou colaminées avec un film de polymère thermoplastique.

Lesdits plis fibreux sont prédécoupés de sorte que même les plis (210, 220) s'étendant sur toute la surface de la coque et couvrant les 5 faces de celle-ci, comprennent des découpes (221, 222) de sorte qu'ils ne couvrent pas les zones de raccordement entre les faces de la coque.

Figure 2A, selon un exemple de réalisation, le pli (210) comporte des découpes (222) de sorte à ne pas couvrir les zones de raccordement entre les bords tombés de la future coque qu'il couvre, lesdites découpes incluant les zones de raccordement trièdres.

Figure 2B, selon un autre exemple de réalisation, le pli (220) comporte une découpe (221) au niveau des zones de raccordement trièdres ou coins de malle, entre les faces qu'il couvre.

Ces exemples de réalisation ne sont pas limitatifs. Ainsi un résultat de même degré est obtenu, par exemple, en empilant de manière alternée des plis rectangulaires dont la grande dimension s'étend selon l'axe y avec des plis rectangulaires dont la grande dimension s'étend selon l'axe x, ceci afin de simplifier les découpes.

Figure 2B, le même principe s'applique pour la configuration représentée dans cette figure.

Quel que soit le mode de réalisation, les découpes (222, 221) sont adaptées à la forme de la zone de raccordement en coin de malle de la pièce finale, notamment aux rayons de raccordement entre les faces.

Figure 2B, si les découpes (221) du pli (220) sont représentées comme des découpes circulaires, celles-ci prennent une forme elliptique voire trilobé si les raccordements en coin de malle visé sur la coque finale ont une forme autre que sphérique.

Du fait de la présence de ces découpes, les plis ne couvrent pas les zones non-développables de la pièce finale et ceux-ci sont aisément appliqués sur ou dans un outillage à la forme de la pièce à réaliser, en les pliants selon les lignes de pliage (215, 225) de sorte à réaliser les bords tombés.

Avantageusement, les dimensions des plis sont variables en fonction de leur position dans l'empilement de sorte à tenir compte des variations des rayons de raccordement entre les faces en fonction de l'épaisseur de la coque à réaliser.

Les plis (210, 220) sont empilés sur un outillage de type poinçon, en relief, ou de type matrice, en creux, à la forme de la coque à réaliser.

Selon la nature du polymère constituant la matrice du matériau composite est présent dans le pli sous la forme d'un enduit, d'un film colaminé ou de fibres comêlées, et selon le rayon de raccordement entre les faces de la coque, le pliage des plis est réalisé en chauffant localement le pli dans la zone de pliage, par exemple au moyen d'un fer à souder ou tout autre moyen adapté.

Avantageusement, lors de la réalisation de la stratification, les plis sont soudés entre eux par des points ou des lignes de soudure de sorte à stabiliser l'assemblage et faciliter sa manipulation.

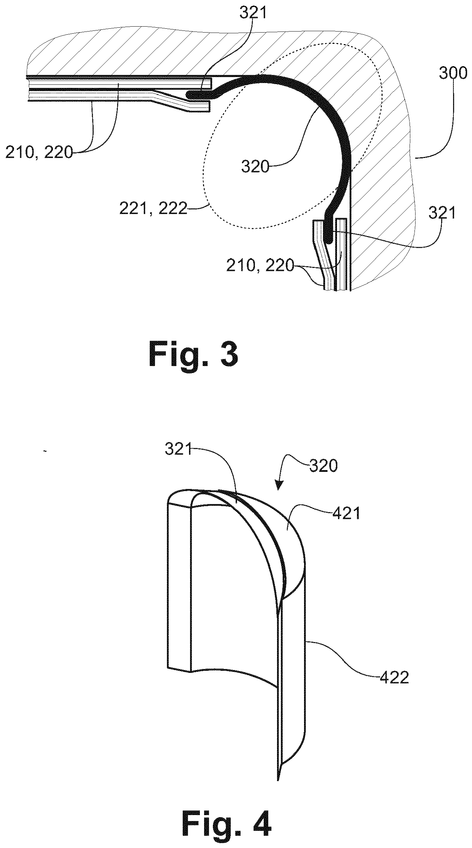

Figure 3, le raccordement entre les plis (210, 220) dans les zones de raccordements, correspondant aux zones de découpe (221, 222) des plis est réalisé dans l'outillage (300), ici une matrice comprenant une empreinte à la forme de la coque, par des pièces de raccord (320).

Lesdites pièces de raccord (320) sont à la forme de la surface raccord dans lesdites zones de raccords entre les faces de la coque et comprennent une portion (321) d'ancrage apte à être intégrée entre les plis (210, 220) sur les bords des zones de découpe (221, 222).

Figure 4, selon un exemple de réalisation la pièce de raccord (320) comprend 2 parties (421, 422) distinctes ou venant de matière l'une de l'autre. L'une (421) de ces deux parties correspondant à la zone de raccordement trièdre et l'autre (422) à la zone de raccordement essentiellement développable entre les faces.

La portion d'ancrage (321) est ici représentée simple, mais selon des exemples de réalisation comprend des reliefs pour parfaire son accrochage entre les plis.

Selon un mode de réalisation (non représenté) lesdites pièces de raccords comprennent des aménagements pour l'installation d'un boîtier supportant des roulettes ou pour le passage des bras d'une poignée télescopique.

Les pièces de raccord sont de toute nature, notamment en matière plastique, métallique ou composite.

Lesdites pièces de raccord sont obtenues par la mise en oeuvre d'in procédé adapté à leur nature, et sont réalisées indépendamment de la coque, de sorte qu'elles peuvent être réalisées en grande série dans une unité de fabrication distante de l'unité de fabrication des coques.

Selon un mode de réalisation avantageux, les pièces de raccord sont constituées d'un polymère thermoplastique et sont obtenues par un procédé d'injection plastique ou par thermocompression.

Selon une variante de ce mode de réalisation, les pièces de raccord sont constituées d'un polymère thermoplastique renforcé par des fibres courtes.

Selon un mode de réalisation avantageux, la température de fusion du polymère constituant les pièces de raccord est supérieure à la température de fusion (dans le cas d'un polymère thermoplastique) ou à la température de cuisson (dans le cas d'un polymère thermodurcissable) du polymère imprégnant les plis constituant le reste de la coque.

Avantageusement, la température de transition vitreuse du polymère constituant la pièce de raccord est inférieure à la température de fusion ou à la température de cuisson du polymère imprégnant les plis constituant le reste de la coque. Ainsi, lors de la consolidation ou de la cuisson de l'ensemble, les pièces de raccord présentent une certaine plasticité qui permet une adaptation de la forme au moule.

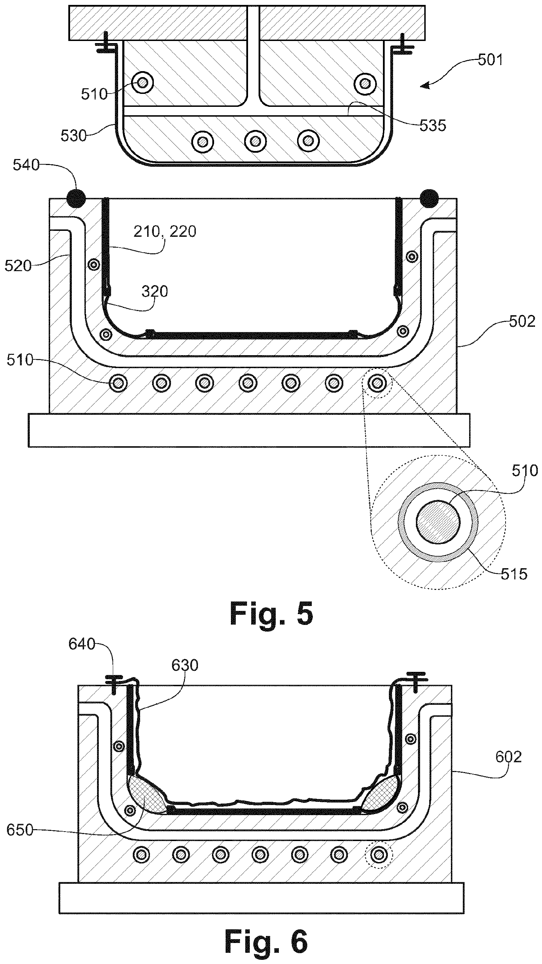

Figure 5, selon un premier mode de réalisation, la consolidation de l'ensemble, comprenant la stratification et les pièces de raccord, est réalisée dans un moule comprenant un poinçon (501) et une matrice (502) appairés.

Le poinçon et la matrice sont installés, l'un sur le plateau, l'autre sur la partie mobile d'une presse.

Le poinçon et/ou la matrice comprennent avantageusement un réseau de chauffage comprenant des inducteurs (510) cheminant dans des cavités pratiquées respectivement dans le poinçon et dans la matrice, et réparties de sorte à obtenir une température de chauffage uniforme de la préforme, lorsque lesdits inducteurs sont alimentés par un courant alternatif à une fréquence comprise entre 10 KHz et 100 KHz.

La répartition spatiale des inducteurs dans la matrice ou dans le poinçon est obtenue, par exemple, au moyen de simulations thermiques mettant en oeuvre des calculs par éléments finis.

Le poinçon et / ou la matrice sont préférentiellement réalisés dans un matériau présentant une bonne conductivité thermique et une effusivité thermique élevées, tels qu'un alliage d'aluminium ou un alliage de cuivre.

Cette caractéristique favorise un chauffage rapide et une transmission rapide de la chaleur du moule à la préforme, mais participe également à l'obtention d'une uniformité de température sur les surfaces du poinçon ou de la matrice en contact avec la préforme lors de la consolidation.

Figure 5, comme le montre la vue de détail, les parois des cavités comprennent une couche (515) d'un matériau sensible au chauffage par induction, tel qu'un acier ferromagnétique ou un alliage de nickel sans que ces exemples ne soient limitatifs.

L'épaisseur de cette couche (515) est de l'ordre du millimètre.

Selon un mode de réalisation la couche (515) de matériau sensible au chauffage par induction ne recouvre pas l'intégralité de la surface de la cavité, mais uniquement la portion de section de la cavité orientée vers la surface du moule en contact avec la préforme.

Cette caractéristique permet d'orienter le chauffage vers la préforme et d'obtenir une répartition uniforme de la température de chauffage de celle-ci sans chauffer toute la masse du moule.

Selon un autre mode de réalisation le moule est entièrement réalisé dans un acier ferromagnétique à la température de formage visée.

Lorsque les inducteurs (510) sont alimentés en courant alternatif, la couche (515) sensible au chauffage par induction monte en température et transmet sa chaleur à la matrice ou au poinçon, qui conduisent cette chaleur jusqu'à la préforme.

Le moule comprend également des moyens de refroidissement (520) sous la forme de conduits dans lesquels circule un fluide caloporteur, tel que de l'eau, de l'huile ou un gaz.

Ledit circuit de refroidissement permet de refroidir rapidement le moule et la préforme consolidée et ainsi de réduire la durée des cycles de fabrication.

Selon un exemple de réalisation, le poinçon (501) comprend une vessie (530) gonflable et des moyens (535) pour gonfler ladite vessie.

Le moule comprend, en outre, des moyens (540) pour réaliser l'étanchéité entre le poinçon (501) et la matrice (502) lorsque le moule est fermé c'est-à-dire lorsque le poinçon est rapproché de la matrice au moyen de la presse.

Ainsi, lorsque le moule est fermé, la préforme est comprise dans une cavité étanche délimitée entre le poinçon (501) et la matrice (502).

Selon un mode de mise en oeuvre plutôt adapté au cas où les plis (210, 220) comprennent un polymère thermoplastique, la préforme intégrant les pièces de raccord (320) placée dans la matrice (502) ou sur le poinçon (501).

Préalablement, la préforme est assemblée en assemblant les plis (210, 220) et les pièces de raccord (320), soit directement dans l'un des outillages, poinçon ou matrice, du moule, soit sur un outillage séparé.

S'agissant de plis préimprégnés d'un polymère thermoplastique, les plis sont maintenus entre eux, ainsi qu'avec les pièces de raccord, par des points ou des lignes de soudure.

Cet assemblage préalable de la préforme est réalisé manuellement ou par un robot.

La matrice est rapprochée du poinçon de sorte à créer une cavité étanche dans laquelle est comprise ladite préforme.

Selon un mode de réalisation, ladite cavité est tirée au vide par des moyens appropriés (non représentés).

Parallèlement, les inducteurs (510) sont alimentés en courant alternatif ce qui a pour effet de chauffer la préforme, jusqu'à une température au moins égale à la température de fusion du polymère thermoplastique imprégnant les plis.

Selon leur constitution, les pièces de raccord (320) conservent leur intégrité à cette température, mais avantageusement, selon un mode de réalisation, lorsque lesdites pièces de raccord sont constituées d'un polymère injecté ou formé par thermocompression, la température de transition vitreuse du polymère constituant les pièces de raccord (320) est inférieure à la température de fusion du polymère imprégnant les plis.

Une pression supplémentaire est appliquée sur la préforme en déplaçant le poinçon vers la matrice et/ou en gonflant la vessie (530) du poinçon.

L'application de cette pression permet de calibrer l'épaisseur finale de la pièce et d'assurer d'une répartition uniforme du polymère dans son épaisseur.

Les pièces de raccord (320), lorsqu'elles sont constituées d'un polymère, étant relativement malléables, lorsque cette pression supplémentaire est appliquée, ladite pression leur fait épouser la forme du moule et assure ainsi un raccord esthétiquement parfait entre les plis et lesdites pièces de raccord.

L'alimentation électrique des inducteurs est stoppée, et le fluide caloporteur est envoyé dans les conduits (520), de sorte à refroidir le moule est la préforme, tout en maintenant la pression sur ladite préforme.

Lorsque la température de la préforme est inférieure à la température de transition vitreuse du polymère imprégnant les plis, le moule peut être ouvert et la pièce démoulée.

Le cycle reprend alors avec une nouvelle préforme.

L'utilisation d'un chauffage par induction et d'un refroidissement forcé permet d'accomplir le cycle dans une durée inférieure à 5 minutes.

Figure 6, selon un exemple de réalisation, l'outillage de mise en oeuvre du procédé objet de l'invention comprend une forme, mâle ou femelle (602), sur ou dans laquelle est installée la préforme comprenant les pièces de raccord, une bâche (630) et des moyens (640) pour réaliser une étanchéité entre ladite bâche (630) et l'outillage (602).

La préforme étant installée dans ou sur l'outillage, celle-ci est contenue dans une cavité étanche entre ledit outillage et la bâche (630).

Ce mode de réalisation est plutôt adapté, mais non exclusivement, au cas où les plis de la préforme sont imprégnés d'un polymère thermodurcissable.

Comme dans le mode de réalisation précédent, l'outillage comprend des moyens de chauffage par induction et des moyens de refroidissement.

Des moyens (non représentés) permettent de tirer au vide l'espace compris entre la bâche (630) et les parois de l'outillage (602), espace dans lequel se trouve la préforme.

Des pièces intermédiaires (650) constituées d'un matériau compressible, sont placées entre la bâche (630) et la préforme au niveau des pièces de raccord.

Ainsi, la préforme présentant des zones non développables, plus particulièrement dans les zones de raccord, par la présence des pièces de raccord et des pièces intermédiaires (650) la formation de plis dans la bâche (630) est confinée à ces zones non développables où elle n'influence pas la qualité de la pièce finale. Cette caractéristique permet également de réduire le coût de réalisation de la bâche (630).

Selon ce mode de mise en oeuvre, la préforme étant placée sur ou dans l'outillage, et la bâche installée, l'espace entre la bâche et l'outillage et dans lequel se trouve la préforme est tiré au vide, en même temps que les inducteurs sont alimentés en courant alternatif pour porter la préforme à la température de cuisson (ou de fusion dans le cas d'un polymère thermoplastique) du polymère imprégnant les plis de la préforme.

La bâche assure une pression uniforme sur l'ensemble des plis de la préforme.

La pression et la température sont maintenues pendant le cycle de cuisson, puis les moyens de refroidissement sont utilisés pour refroidir le moule et la pièce ainsi réalisée, avant de casser le vide et de démouler ladite pièce.

Figure 5, l'homme du métier comprend que l'outillage représenté est également utilisable pour la cuisson d'une préforme comprenant des plis imprégnés d'un polymère thermodurcissable

Figure 6, l'homme du métier comprend de même que l'outillage représenté est également utilisable pour la consolidation d'une préforme comprenant des plis imprégnés d'un polymère thermoplastique.

La description ci-avant et les exemples de réalisation montrent que l'invention atteint le but visé et permet à partir de plis fibreux préimprégnés d'un polymère thermoplastique ou thermodurcissable d'obtenir une pièce composite renforcée par des fibres continues en forme de coque quadrangulaire présentant embouti profond sans recourir à des techniques de drapage ou d'estampage complexes.

Le procédé objet de l'invention est ainsi adapté à l'obtention de telles pièces en grande série pour des biens de consommation courante tels que des produits de bagagerie.

## Revendications

1. Procédé pour la fabrication d'une coque quadrangulaire comprenant cinq faces avec des bords tombés (102) et des raccords trièdres (121) non développables entre les faces, constituée d'un matériau composite à renfort fibreux continu comprenant des fibres (110) s'étendant d'un bord libre un autre bord libre, le procédé comprenant les étapes consistant à :
i. découper des plis (210, 220) des fibres continues (290), lesdites fibres s'étendant d'un bord libre (291) à un autre bord libre (292) de la coque, lesdits plis comprenant des découpes (221, 222) de sorte à ne pas couvrir les zones de raccordement trièdres ;
ii. obtenir quatre pièces de raccord (320) consolidées à la forme desdits raccords trièdres, chaque pièces comprenant une zone d'intégration (321) pour son insertion entre des plis ;
iii. positionner et empiler les plis obtenus à l'étape i)
iv. insérer les quatre pièces consolidées (320) dans les zones de raccordement trièdres en insérant les zones d'intégration entre deux plis pour obtenir une préforme ;
v. placer la préforme dans un outillage (502, 602) et réaliser la consolidation de l'empilement de plis fibreux en soumettant l'ensemble obtenu à l'étape iv) à un cycle de pression - température prédéterminé.

2. Procédé selon la revendication 1, dans lequel les pièces de raccord (320) sont constituées d'un polymère thermoplastique.

3. Procédé selon la revendication 2, dans lequel le polymère constituant les pièces de raccord (320) est renforcé par des fibres courtes.

4. Procédé selon la revendication 1, dans lequel les pièces de raccord sont obtenues par un procédé d'injection plastique.

5. Procédé selon la revendication 1, dans lequel les pièces de raccord (320) sont obtenu par un procédé de thermocompression.

6. Procédé selon la revendication 2, dans lequel le polymère constituant les pièces de raccord est sélectionné de sorte que la température maximale de consolidation appliquée à l'ensemble lors de l'étape v) soit supérieure à la température de transition vitreuse dudit polymère mais inférieure à la température de fusion dudit polymère.

7. Procédé selon la revendication 1, dans lequel les pièces de raccord (320) s'étendent entre les bords tombés de la coque formée.

8. Procédé selon la revendication 1, dans lequel l'étape v) est réalisée dans un outillage comprenant un poinçon (501) et une matrice (502) appairés, l'ensemble obtenu à l'étape vi) étant compris entre le poinçon et la matrice lors de l'étape v).

9. Procédé selon la revendication 1, dans lequel l'étape v) comprend le bâchage de l'ensemble obtenu à l'étape iv) par une bâche (630) étanche et le tirage au vide de l'espace compris entre la bâche et l'outillage.

10. Coque adaptée à un élément de bagage, comprenant cinq faces avec des bords tombés (102) et des raccords trièdres (121) non développables entre les faces, constituée d'un matériau composite à renfort fibreux continu comprenant des fibres (110) s'étendant d'un bord libre un autre bord libre, obtenue par le procédé selon la revendication 1, comprenant des pièces de raccord trièdre comportant des aménagements pour l'installation d'un boîtier de support de roulettes ou le passage des bras d'une poignée télescopique.

## Patentansprüche

1. Verfahren zur Herstellung einer viereckigen Schale, die 5 Flächen mit gebördelten Rändern (102) und nicht entwicklungsfähigen dreiflächigen Verbindungen (121) zwischen den Flächen umfasst, die aus einem kontinuierlichen faserverstärkten Verbundmaterial hergestellt sind, das Fasern (110) umfasst, die sich von einem freien Rand zu einem anderen freien Rand erstrecken, wobei das Verfahren die folgenden Schritte umfasst:
I. Schneiden von Lagen (210, 220), die Lagen umfassen, die sich über die fünf Flächen der Schale außerhalb der dreiflächigen Verbindungen erstrecken und kontinuierliche Fasern (290) umfassen, wobei sich die Fasern von einem freien Rand (291) zu einem anderen freien Rand (292) der Schale erstrecken, wobei die Lagen Ausschnitte (221, 222) umfassen, um die dreiflächigen Verbindungszonen nicht zu bedecken;
II. Erhalten von vier konsolidierten Verbindungsteilen (320) mit einer Form der dreiflächigen Verbindungszonen, wobei jedes Verbindungsteil eine Integrationszone (321) zum Einfügen zwischen die Lagen umfasst;
III. Positionieren und Auflegen der in Schritt i) erhaltenen Lagen;
IV. Einsetzen der vier verfestigten Kupplungsteile (320) in die dreiflächigen Kupplungszonen durch Einsetzen der Integrationszonen zwischen zwei Lagen, um einen Vorformling zu erhalten;
V. Einsetzen des Vorformlings in ein Werkzeug (502, 602) und Verfestigen der Laminierung von Faserlagen, indem die in Schritt iv) erhaltene Anordnung einem vorbestimmten Druck-Temperatur-Zyklus unterzogen wird.

2. Verfahren nach Anspruch 1, wobei die Kupplungsteile (320) aus einem thermoplastischen Polymer hergestellt sind.

3. Verfahren nach Anspruch 2, wobei das Polymer, aus dem die Kupplungsteile (320) bestehen, mit kurzen Fasern verstärkt ist.

4. Verfahren nach Anspruch 1, wobei die Kupplungsteile durch ein Kunststoffspritzverfahren hergestellt werden.

5. Verfahren nach Anspruch 1, wobei die Kupplungsteile (320) durch ein Thermokompressionsverfahren erhalten werden.

6. Verfahren nach Anspruch 2, bei dem das Polymer, aus dem die Kupplungsteile bestehen, so ausgewählt wird, dass die maximale Verfestigungstemperatur, die in Schritt (v) auf die Baugruppe angewendet wird, größer als eine Glasübergangstemperatur des Polymers, aber kleiner als eine Schmelztemperatur des Polymers ist.

7. Verfahren nach Anspruch 1, wobei sich die Kupplungsteile (320) zwischen den Flanschkanten der geformten Schale erstrecken.

8. Verfahren nach Anspruch 1, bei dem Schritt (v) in einem Werkzeug ausgeführt wird, das einen gepaarten Stempel (501) und eine Matrize (502) umfasst, wobei die in Schritt (vi) erhaltene Anordnung zwischen dem Stempel und der Matrize in Schritt (v) enthalten ist.

9. Verfahren nach Anspruch 1, wobei Schritt (v) das Abdecken der in Schritt (iv) erhaltenen Anordnung mit einer wasserdichten Plane (630) und das Vakuumevakuieren eines Raums zwischen der Plane und dem Werkzeug umfasst.

10. Schale, die zu einem Gepäckelement konfiguriert ist, mit fünf Flächen mit gebördelten Rändern (102) und dreiflächigen Verbindungen (121), die zwischen den Flächen nicht abwickelbar sind, aus einem Verbundwerkstoff mit kontinuierlicher Faserverstärkung, die Fasern (110) umfasst, die sich von einem freien Rand zu einem anderen freien Rand erstrecken, erhalten nach dem Verfahren des Anspruchs 1, mit dreiflächigen Verbindungsteilen, die Anordnungen für den Einbau eines Lenkradgehäuses oder für den Durchgang von Schienen eines Teleskopgriffs umfassen.

## Claims

1. A method for making a quadrangular shell comprising 5 faces with flanged edges (102) and non-developable trihedral couplings (121) between the faces, made of a continuous fibrous reinforced composite material comprising fibers (110) extending from one free edge to another free edge, the method comprising the steps of:
i. cutting plies (210, 220) comprising plies extending over the 5 faces of the shell outside the trihedral couplings and comprising continuous fibres (290), said fibres extending from a free edge (291) to another free edge (292) of the shell, said plies comprising cut-outs (221, 222) so as not to cover the trihedral coupling zones;
II. obtaining four consolidated coupling parts (320) with a shape of said trihedral coupling zones, each coupling part comprising an integration zone (321) for insertion between the plies;
III. Positioning and laying up the plies obtained in step i)
IV. inserting the four consolidated coupling parts (320) into the trihedral coupling zones by inserting the integration zones between two plies to obtain a preform;
v. placing the preform in a tooling (502, 602) and consolidating the lamination of fibrous plies by subjecting the assembly obtained in step iv) to a predetermined pressure-temperature cycle.

2. The method of claim 1, wherein the coupling parts (320) are made of a thermoplastic polymer.

3. The method of claim 2, wherein the polymer making the couoling parts (320) is reinforced with short fibers.

4. The method of claim 1, wherein the coupling parts are obtained by a plastic injection process.

5. The method of claim 1, wherein the coupling parts (320) are obtained by a method of thermocompression.

6. The method of claim 2, wherein the polymer making the coupling parts is selected so that the maximum consolidation temperature applied to the assembly in step (v) is greater than a glass transition temperature of said polymer but less than a melting temperature of said polymer.

7. The method of claim 1, wherein the coupling parts (320) extend between the flanged edges of the formed shell.

8. The method of claim 1, wherein step (v) is carried out in a tooling comprising a paired punch (501) and a die (502), the assembly obtained in step (vi) being comprised between the punch and the die in step (v).

9. The method of claim 1, wherein step (v) comprises covering the assembly obtained in step (iv) with a watertight tarpaulin (630) and vacuum evacuating a space between the tarpaulin and the tooling.

10. A shell configured to a piece of luggage element, comprising five faces with flanged edges (102) and trihedral couplings (121) non-developable between the faces, made of a composite material with continuous fibrous reinforcement comprising fibers (110) extending from one free edge to another free edge, obtained by the method of claim 1, comprising trihedral coupling parts comprising arrangements for the installation of a caster wheel casing or for the passage of rails of a telescopic handle.
